# EUROPEAN PATENT APPLICATION

(11) **EP 4 516 842 A1**
(43) Date of publication of application: **05.03.2025**
(21) Application number: 23815663.2
(22) Date of filing: 01.05.2023
(51) Int. Cl.: C08J 5/18

(54) **STRETCHED FILM**

(30) Priority: 02.06.2022 JP 2022090450
(71) Applicant: C.I. TAKIRON Corporation, Kita-Ku Osaka-Shi Osaka 530-0001 (JP)
(72) Inventor: SASAHARA Kazufusa, Osaka-shi, Osaka 530-0001 (JP); MORI Keiichi, Osaka-shi, Osaka 530-0001 (JP); OSHIMA Hiroyuki, Osaka-shi, Osaka 530-0001 (JP)
(74) Representative: advotec.
(86) International application number: PCT/JP2023/017020
(87) International publication number: WO 2023/233902

(57) **Abstract**

The stretched film (3) contains, as a main component, polyethylene having a density of 0.950 g/cm³ or more and has a water vapor transmission rate of 1.0 g/m²·day or less per 100 µm of the polyethylene film (3), a haze of 20% or less, and a thermal shrinkage of 10% or less in a film stretching direction when heated for 10 minutes at 100°C.

## Description

### TECHNICAL FIELD

The present invention relates to a stretched film for use in a packing film.

### BACKGROUND ART

For example, a stack including a base film made of a resin material and a sealant film made of a material different from the resin material forming the base film, stacked on each other, has been employed as a packing film used in a pouch and the like.

Here, a reduction in environmental load is required for plastics in general, and recycling properties are also required for packing films. However, in the case of the above-described stack of films made of different materials, separation of the materials is difficult. Thus, there is a problem that recycling is difficult.

Therefore, in recent years, there has been a growing trend toward mono-materialization in which packing films are made of a single material. Examples of the resin used for the packing film as a mono-material include polyethylene, polypropylene, polyethylene terephthalate, etc. Among these, polyethylene is a material which is most frequently used in existing packing films and is particularly required to be mono-materialized.

As the packing film using polyethylene, for example, a stack has been proposed which includes a base film and a sealant film, in which the base film and the sealant film are made of polyethylene, and the base film has been stretched. According to description, with such a configuration, a stack having high recyclability, printability, and strength and having improved transparency of the base film can be provided (see, for example, Patent Document 1).

### CITATION LIST

### PATENT DOCUMENT

Patent Document 1: Japanese Unexamined Patent Publication No. 2019-171860

### SUMMARY OF THE INVENTION

### TECHNICAL PROBLEM

Various functions are required for packing films, but it is known that heat shrinkage occurs when the films are stretched. When the density of polyethylene is less than 0.950 g/cm³ and the stretching temperature is low (e.g., 80°C) in the packing film described in the Patent Document 1 above, the water vapor barrier property improves, but the thermal shrinkage at 100°C becomes large, and the base film shrinks during heat sealing in bag making. This causes wrinkles and poor appearance. In addition, when the stretching temperature is high (e.g., 120°C), the effect of heat fixation becomes large, and thus, the thermal shrinkage at 100°C becomes small, but there is a problem that the water vapor barrier property decreases. As a result, it has been difficult to achieve both water vapor barrier property and heat resistance.

The present invention was made in view of the above problems, and an object of the present invention is to provide a stretched film having excellent water vapor barrier property, heat resistance, and transparency.

### SOLUTION TO THE PROBLEM

In order to achieve the above object, a stretched film of the present invention is a stretched film containing, as a main component, polyethylene having a density of 0.950 g/cm³ or more, the stretched film having a water vapor transmission rate of 1.0 g/m²·day or less per 100 µm of the stretched film, a haze of 20% or less, and a thermal shrinkage of 10% or less in a film stretching direction when heated for 10 minutes at 100°C.

### ADVANTAGES OF THE INVENTION

According to the present invention, a stretched film having an excellent water vapor barrier property, heat resistance, and transparency can be provided.

### BRIEF DESCRIPTION OF THE DRAWINGS

[FIG. 1] A sectional view of a stack using a stretched film of the present invention.
[FIG. 2] A plan view of a stack using the stretched film of the present invention.

### DESCRIPTION OF EMBODIMENTS

The stretched film according to the present invention will be described in detail below. It should be noted that the present invention is not limited to the following embodiments and can be appropriately modified and applied without departing from the scope of the present invention.

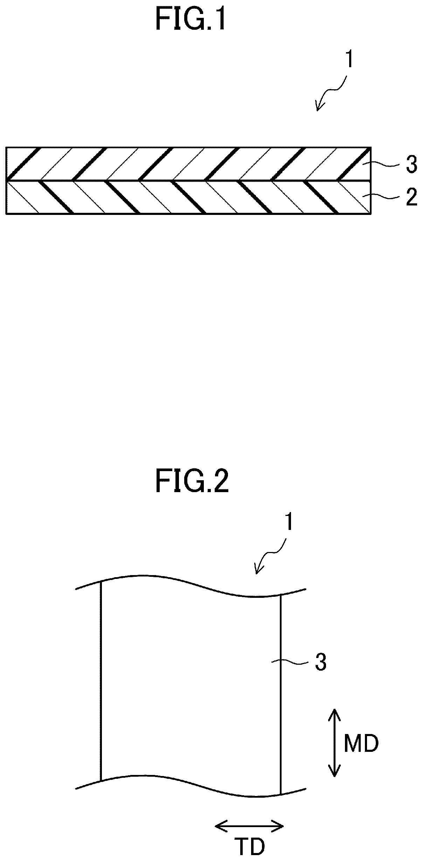

FIG. 1 is a sectional view of a stack using the stretched film according to the present invention.

A stack 1 includes a polyethylene film 3 serving as a base film, and a sealant film 2 stacked on the polyethylene film 3.

### <Sealant Film>

In view of mono-material, the sealant film 2 according to the present invention is preferably a polyethylene-based resin. More specific examples thereof include high-density polyethylene (HDPE), middle-density polyethylene (MDPE), low-density polyethylene (LDPE), linear low-density polyethylene (LLDPE), etc.

In view of improving heat-sealing property, the sealant film 2 is preferably low-density polyethylene (LDPE) or linear low-density polyethylene (LLDPE) each having a lower melting point than the base film in order to provide a melting point difference from the base film.

The content of the polyethylene in the sealant film 2 is preferably 70% or more, more preferably 90% or more, yet more preferably 95% or more, most preferably 100%.

The sealant film 2 has a thickness of preferably 20 µm to 200 µm, more preferably 30 µm to 150 µm.

The sealant film 2 may contain other components than the polyethylene-based resin as long as the characteristics of the sealant film 2 are not impaired.

Examples of the other components include an olefin-based resin, an amide-based antiblocking agent (such as octadecanamide), a plasticizer, an ultraviolet absorber, an antioxidant, a weathering agent, an antistatic agent, a colorant, an anti-fogging agent, metal soap, wax, an antifungal agent, an antibacterial agent, a nucleating agent, a flame retardant, a lubricant, etc.

### <Polyethylene Film>

The polyethylene film 3 according to the present invention contains, as a main component, high-density polyethylene (HDPE), and in the present invention, the high-density polyethylene has a density of 0.950 g/cm³ or more. When the density is 0.950 g/cm³ or more, crystallinity of polyethylene improves, thereby improving the water vapor barrier property.

In view of further improving the water vapor barrier property, the high-density polyethylene has a density of preferably 0.955 g/cm³ or more, more preferably 0.962 g/cm³ or more, yet more preferably 0.970 g/cm³ or more.

The high-density polyethylene has a melt mass-flow rate (MFR) of preferably 0.01 g/10 min to 3.00 g/10 min, more preferably 0.02 g/10 min to 2.50 g/10 min, yet more preferably 0.1 g/10 min to 2.00 g/10 min. When the melt mass-flow rate (MFR) is 0.01 g/10 min or more, the high-density polyethylene can be molded with a general-purpose extruder without using special equipment, and when the melt mass-flow rate (MFR) is 3.00 g/10 min or less, the high-density polyethylene can have sufficient film strength.

The melt mass-flow rate can be obtained by measurement in accordance with JIS K 7210:1999.

In view of obtaining an excellent water vapor barrier property, the content of the high-density polyethylene in the entire polyethylene film is preferably 90 mass% or more, more preferably 95 mass% or more relative to 100 mass% of the polyethylene film.

When the high-density polyethylene having a density of 0.950 g/cm³ or more is used as a resin for forming a polyethylene film, the water vapor transmission rate per 100 µm of the polyethylene film is 1.0 g/m²·day or less. Accordingly, a polyethylene film having an excellent water vapor barrier property can be provided.

In view of improving a water vapor barrier property, the water vapor transmission rate per 100 µm of the polyethylene film is preferably 0.8 g/m²·day or less, more preferably 0.5 g/m²·day or less.

The "water vapor transmission rate" herein refers to a value measured using a water vapor transmission rate measurement device in accordance with JIS K 7129-1 under an atmosphere at a temperature of 40°C and a humidity of 90%.

### <Other Component>

The stretched film may further contain other components than the high-density polyethylene as long as stretchability of the stretched film is not impaired.

Examples of the other components include an olefin-based resin, an amide-based antiblocking agent (such as octadecanamide), a plasticizer, an ultraviolet absorber, an antioxidant, a weathering agent, an antistatic agent, a colorant, an anti-fogging agent, metal soap, wax, an antifungal agent, an antibacterial agent, a nucleating agent, a flame retardant, a lubricant, etc.

### <Method for Producing Stack>

Next, a method for producing a stack using the stretched film according to the present invention will be described in detail.

First, a raw material containing the high-density polyethylene is molded into a film by using an extruder, thereby producing a polyethylene film.

More specifically, the high-density polyethylene and other components described above if necessary are mixed at a predetermined mixing ratio, and the resultant mixture is molded into a film by melt extrusion using an extruder equipped with a T-die, thereby obtaining a raw film before stretching.

Then, the raw film is subjected to uniaxial stretching, thereby producing a stretched film which serves as a polyethylene film, shown in FIGS. 1 and 2. The method of the stretching is not particularly limited, and examples thereof include roll stretching, tenter stretching, or the like.

The uniaxial stretching refers to stretching performed in either one of a machine (longitudinal) direction (hereinafter referred to as "MD") or a direction orthogonal to MD (hereinafter referred to as "TD") of the film shown in FIG. 2. Biaxial stretching of stretching in both MD and TD may also be performed.

The stretching temperature in the uniaxial stretching is from 80°C to 125°C inclusive. This is because the film may be opaque when the stretching temperature is less than 80°C. When the stretching temperature is higher than 125°C, the stretched film may melt and be ruptured.

The stretch ratio in the uniaxial stretching is from 5 times to 9 times inclusive. This is because an unstretched portion remains when the stretch ratio is less than 5 times, and transparency may thus decrease. This is also because the film may be ruptured when the stretch ratio is more than 9 times. In view of improving transparency and reducing rupture of the film, the stretch ratio is preferably from 6 times to 8 times inclusive.

The polyethylene film produced by the stretching has a haze of 20% or less. Thus, excellent transparency can be obtained.

In view of further improving transparency, the polyethylene film has a haze of preferably 10% or less, more preferably 7% or less, yet more preferably 5% or less.

The "haze" herein refers to an indicator of cloudiness measured in accordance with JIS K 7361.

The polyethylene film according to the present invention has a thermal shrinkage in the film stretching direction of 10% or less when heated for 10 minutes at 100°C. When the thermal shrinkage is 10% or less, the dimensional stability in a heat treatment is high, and therefore, a polyethylene film having excellent heat resistance can be provided.

When the density of the high-density polyethylene, which is a main component of the polyethylene film, becomes high, the melting point of the high-density polyethylene becomes high. Thus, an increase in thermal shrinkage can be reduced.

In view of improving heat resistance, the polyethylene film has a thermal shrinkage of preferably 6% or less, more preferably 4% or less, yet more preferably 2% or less.

The "thermal shrinkage" can be determined by the method described in Examples, which will be described later.

The polyethylene film according to the present invention has a tensile rupture stress of 100 MPa or more in at least one of MD or TD. When the tensile rupture stress is 100 MPa or more, the film is dimensionally stable and excellent in transportability during transportation in subsequent steps of printing and laminating. Accordingly, a polyethylene film having sufficient strength as a base film can be provided.

In view of improving transparency, the tensile rupture stress of the polyethylene film is preferably 300 MPa or more

The "tensile rupture stress" refers to a stress measured in accordance with JIS K 7127.

A raw film before the stretching has a thickness of preferably 50 µm to 400 µm, more preferably 80 µm to 300 µm. When the thickness of the raw film is 50 µm or more, the strength capable of withstanding the stress in the stretching can be obtained. When the thickness of the raw film is 400 µm or less, sufficient transparency can be obtained after the stretching.

The polyethylene film after the stretching has a thickness of preferably 10 µm to 50 µm, more preferably 15 µm to 40 µm. When the polyethylene film after the stretching has a thickness of 10 µm or more, the polyethylene film can have sufficient strength and water vapor barrier property as a base film. When the polyethylene film after the stretching has a thickness of 50 µm or less, sufficient transparency can be obtained.

By the method described above, a polyethylene film having an excellent water vapor barrier property, heat resistance, and transparency can be obtained in the present invention.

The polyethylene film which serves as a base film may be single layer or a multilayer including two or more layers. When the polyethylene film is a multilayer, the composition and thickness of each layer may be the same as or different from each other. When the polyethylene film is a multilayer, the thickness thereof means the entire thickness of the multilayer.

Next, a raw material containing a polyethylene-based resin such as the high-density polyethylene (HDPE), middle-density polyethylene (MDPE), low-density polyethylene (LDPE), and linear low-density polyethylene (LLDPE) is prepared, and the raw material is molded into a film by using an extruder by a similar method to the method for the polyethylene film, thereby producing a sealant film.

Then, the polyethylene film and the sealant film are stacked on each other via an adhesive, for example, thereby producing a stack 1 shown in FIG. 1.

### [Examples]

The present disclosure will be described below based on Examples of the present invention. Note that the present invention shall not be limited to these examples. These examples may be modified and changed based on the intent of the present invention. Such a change and modification shall not be excluded from the scope of the present invention.

Materials used for production of the stretched film are shown below.
(1) HDPE 1: high-density polyethylene (density: 0.971 g/cm³, melting point: 134°C, MFR: 1.2 g/10 min, manufactured by Dow Chemical, trade name: ELITE AT 6900)
(2) HDPE 2: high-density polyethylene, (density: 0.962 g/cm³, melting point: 133°C, MFR: 0.24 g/10 min, manufactured by Prime Polymer Co., Ltd., trade name: HI-ZEX 520MB)
(3) HDPE 3: high-density polyethylene, (density: 0.958 g/cm³, melting point: 133°C, MFR: 0.98 g/10 min, manufactured by Prime Polymer Co., Ltd., trade name: HI-ZEX 3600F)
(4) HDPE 4: high-density polyethylene, (density: 0.950 g/cm³, melting point: 133°C, MFR: 0.3 g/10 min, manufactured by Prime Polymer Co., Ltd., trade name: HI-ZEX 6800S)
(5) HDPE 5: high-density polyethylene, (density: 0.943 g/cm³, melting point: 126°C, MFR: 0.24 g/10 min, manufactured by Prime Polymer Co., Ltd., trade name: HI-ZEX 5100E)

### (Example 1)

### <Production of Stretched Film>

First, high-density polyethylene shown in Table 1 was provided. Next, the high-density polyethylene provided was molded into a film by melt extrusion (extrusion temperature: 200°C) using an extruder (manufactured by NAGATA SEISAKUSYO CO.,LTD.) equipped with a T-die, and the resultant film was wound up by a winding roll, thereby obtaining a raw film before the stretching, having a thickness shown in Table 1.

Subsequently, the raw film was uniaxially stretched in the MD at the stretching temperature and stretch ratio shown in Table 1, thereby forming a stretched film (polyethylene film) made of the high-density polyethylene, having a thickness shown in Table 1.

### <Calculation of Water Vapor Transmission Rate per 100 µm>

Next, the water vapor transmission rate [g/m²·day] of the stretched film produced was measured using a water vapor transmission rate measurement device (manufactured by SYSTEC illinois, trade name: water vapor permeation analyzer, Lyssy L80-6000) in accordance with JIS K 7129-1 under an atmosphere at a temperature of 40°C and a humidity of 90%. Then, the water vapor transmission rate measured was multiplied by the thickness [µm]/100 [µm] of the stretched film to calculate the water vapor transmission rate [g/m²·day] per 100 µm of the stretched film. Table 1 shows the results.

### <Measurement of Haze and Total Light Transmittance>

The haze [%] of the stretched film in the visible light region (360 nm to 750 nm) of polyethylene was measured as an indicator of cloudiness of the produced stretched film by using a spectrophotometer (manufactured by Suga Test Instruments Co., Ltd., trade name: haze meter HZ-V3) in accordance with JIS K 7361. Further, the total light transmittance [%] of the produced stretched film was measured in accordance with JIS K 7361-1. Table 1 shows the results.

### <Calculation of Thermal Shrinkage>

A sample having a predetermined size (7 cm × 7 cm) was cut out from the produced stretched film, orthogonal reference lines, each of which is parallel to the corresponding side of the sample and is 5 cm long, were marked on the inside of 1 cm from each side of the sample, and the sample was placed in an oven set at 100°C, heated for 10 minutes, then taken out, and cooled to room temperature. Then, the distance between the reference lines in the stretching direction (i.e., MD or TD) was measured for the sample after the heating, and the thermal shrinkage [%] was calculated from the change in the distance between the reference lines in the stretching direction before and after the heating, by using the following equation (1), and used as an index of the heat resistance. Table 1 shows the results.Thermal shrinkage [%] in stretching direction = [(distance between reference lines before heating - distance between reference lines after heating)/distance between reference lines before heating] × 100

### <Measurement of Tensile Rupture Stress>

The tensile rupture stress [MPa] of the produced stretched film was measured in accordance with JIS K 7127. More specifically, a test film of a dumbbell No. 3 test piece was provided, which was then subjected to a tensile test by using a tensile tester (manufactured by Shimadzu Corporation, trade name: autograph AG-5000A) under conditions at the temperature of 25°C, and the tension speed of 100 mm/min, to measure the tensile rupture stress [MPa] in MD and TD. Table 1 shows the results.

### (Examples 2 to 16 and Comparative Examples 1 to 8)

Each raw film having a thickness shown in Table 1 was stretched in the same manner as in Example 1 except that the composition (i.e., the high-density polyethylene used) of the stretched film and the conditions of the uniaxial stretching were changed to those shown in Table 1, thereby producing each stretched film.

Then, in the same manner as in Example 1, the water vapor transmission rate, the haze, and the total light transmittance were measured, the thermal shrinkage was calculated, and the tensile rupture stress was measured. Tables 1 to 3 show the results.

In Comparative Example 7, the stretching temperature at the time when the film was formed by the uniaxial stretching was higher than 125°C (it was 130°C). Thus, the stretched film was melted and ruptured. Therefore, in Comparative Example 7, the water vapor transmission rate, the haze, and the total light transmittance could not be measured, the thermal shrinkage could not be calculated, and the tensile rupture stress could not be measured.

In Comparative Example 8, it was considered that the film was not stretched and thus that the thermal shrinkage would not occur, and as described below, the film had poor transparency and did not satisfy required physical properties regardless of the numerical value of the thermal shrinkage, and thus the thermal shrinkage was not calculated.

**[Table 1]**

| | | | Example 1 | Example 2 | Example 3 | Example 4 | Example 5 | Example 6 | Example 7 | Example 8 |
|---|---|---|---|---|---|---|---|---|---|---|
| High-density Polyethylene Used | | | HDPE1 | HDPE1 | HDPE1 | HDPE2 | HDPE2 | HDPE2 | HDPE3 | HDPE3 |
| Thickness [µm] | Raw Film | | 96.4 | 96.4 | 251.0 | 100.0 | 100.0 | 251.0 | 104.4 | 104.4 |
| | Stretched Film | | 18.0 | 13.8 | 31.0 | 32.0 | 20.8 | 35.2 | 15.8 | 17.1 |
| Stretched | Stretching Direction | | MD | MD | MD | MD | MD | MD | MD | MD |
| | Stretching Temperature [°C] | | 120 | 120 | 120 | 120 | 120 | 120 | 120 | 120 |
| | Stretch Ratio [-] | | 5 | 9 | 9 | 5 | 6 | 9 | 5 | 6 |
| Evaluations | Water Vapor Transmission Rate [g/m² ·day] | | 0.56 | 0.46 | 0.37 | 0.70 | 0.76 | 0.36 | 0.71 | 0.63 |
| | Haze [%] | | 9.5 | 5.6 | 7.1 | 19.5 | 19.4 | 18.6 | 4.6 | 4.7 |
| | Total Light Transmittance [%] | | 91.0 | 91.0 | 90.8 | 90.6 | 90.3 | 90.2 | 91.1 | 91.0 |
| | Tensile Rupture Stress [MPa] | MD | 335 | 348 | 448 | 423 | 507 | 548 | 423 | 401 |
| | | TD | 22 | 23 | 32 | 36 | 34 | 36 | 31 | 29 |
| | Thermal Shrinkage [%] in Stretching Direction | | 3.2 | 1.6 | 1.5 | 1.3 | 1.8 | 1.9 | 1.1 | 4.4 |

**[Table 2]**

| | | | Example 9 | Example 10 | Example 11 | Example 12 | Example 13 | Example 14 | Example 15 | Example 16 |
|---|---|---|---|---|---|---|---|---|---|---|
| High-density Polyethylene Used | | | HDPE3 | HDPE3 | HDPE2 | HDPE2 | HDPE2 | HDPE2 | HDPE4 | HDPE3 |
| Thickness [µm] | Raw Film | | 267.8 | 267.8 | 100.0 | 100.0 | 100.0 | 100.0 | 101.0 | 100.0 |
| | Stretched Film | | 44.4 | 38.0 | 26.8 | 29.4 | 27.2 | 26.4 | 18.8 | 25.0 |
| Stretched | Stretching Direction | | MD | MD | MD | MD | MD | MD | MD | TD |
| | Stretching Temperature [°C] | | 120 | 120 | 80 | 90 | 100 | 110 | 120 | 120 |
| | Stretch Ratio [-] | | 7 | 9 | 5 | 5 | 5 | 5 | 6 | 5 |
| Evaluations | Water Vapor Transmission Rate [g/m² ·day] | | 0.68 | 0.49 | 0.39 | 0.39 | 0.39 | 0.65 | 0.89 | 0.79 |
| | Haze [%] | | 11.4 | 5.1 | 18.5 | 16.7 | 15.4 | 14.3 | 15.3 | 6.6 |
| | Total Light Transmittance [%] | | 90.9 | 91.0 | 90.1 | 90.3 | 90.4 | 90.5 | 91.0 | 91.1 |
| | Tensile Rupture Stress [MPa] | MD | 311 | 481 | 353 | 349 | 365 | 346 | 394 | 35 |
| | | TD | 37 | 32 | 35 | 34 | 36 | 36 | 39 | 369 |
| | Thermal Shrinkage [%] in Stretching Direction | | 3.9 | 3.9 | 5.3 | 4.0 | 3.2 | 2.7 | 1.9 | 3.1 |

**[Table 3]**

| | | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| High-density Polyethylene Used | | | HDPE5 | HDPE5 | HDPE5 | HDPE5 | HDPE5 | HDPE2 | HDPE2 | HDPE1 |
| Thickness [µm] | Raw Film | | 113.0 | 113.0 | 113.0 | 113.0 | 113.0 | 100.0 | - | 96.4 |
| | Stretched Film | | 34.0 | 33.0 | 34.0 | 29.0 | 27.0 | 28.5 | - | - |
| Stretched | Stretching Direction | | MD | MD | MD | MD | MD | MD | MD | Unstretched |
| | **Stretching Temperature** [°C] | | 80 | 90 | 100 | 110 | 120 | 70 | 130 | Unstretched |
| | **Stretch Ratio** [-] | | 5 | 5 | 5 | 5 | 5 | 5 | 5 | Unstretched |
| Evaluations | Water Vapor Transmission Rate [g/m² ·day] | | 0.87 | 0.94 | 1.12 | 1.14 | 1.61 | 0.39 | - | 0.59 |
| | Haze [%] | | 30.6 | 30.1 | 27.1 | 24.3 | 24.2 | 67.7 | - | 68.3 |
| | Total Light Transmittance [%] | | 90.7 | 90.6 | 90.6 | 90.7 | 90.8 | 66.6 | - | 87.3 |
| | Tensile Rupture Stress [MPa] | MD | 191 | 190 | 216 | 267 | 279 | *355* | - | 51 |
| | | TD | 28 | 20 | 25 | 20 | 23 | 33 | - | 40 |
| | Thermal Shrinkage [%] in Stretching Direction | | 27.9 | 23.0 | 18.1 | 13.6 | 7.8 | 6.9 | - | - |

As can be seen from Tables 1 and 2, in the stretched films of Examples 1 to 16, the density of polyethylene is 0.950 g/cm³ or more, the water vapor transmission rate per 100 µm of each of the stretched films is 1.0 g/m²·day or less, and the haze is 20% or less. It is thus found that the stretched films have an excellent water vapor barrier property and transparency. Further, the thermal shrinkage when the stretched films were heated at 100°C for 10 minutes in the film stretching direction is 10% or less. It is thus found that the stretched films have high dimensional stability after the thermal treatment and excellent heat resistance.

As can be seen from Table 3, in the stretched film of Comparative Example 1, the density of polyethylene is less than 0.950 g/cm³, and the melting point of the high-density polyethylene is low. It is thus found that when the stretching temperature is 80°C, which is low, the thermal shrinkage is considerably larger than 10% and that the heat resistance is poor.

Further, in the stretched film of Comparative Example 2, the density of polyethylene is less than 0.950 g/cm³, and the melting point of the high-density polyethylene is low. It is thus found that when the stretching temperature is 90°C, which is low, the thermal shrinkage is considerably larger than 10% and that the heat resistance is poor.

Further, in the stretched films of Comparative Examples 3 to 5, the density of polyethylene is less than 0.950 g/cm³. It is thus found that the water vapor barrier property is poor.

In addition, in the stretched film of Comparative Example 5, the stretching temperature is 120°C, which is high, and the effect of thermal fixation is large. Thus, the thermal shrinkage is small, and the heat resistance is excellent. However, the density of polyethylene is less than 0.950 g/cm³, and it is thus found that the water vapor barrier property is poor.

Further, in the stretched film of Comparative Example 6, the stretching temperature is less than 80°C. Thus, the film is opaque, and the haze is considerably higher than 20%. It is thus found that the transparency is poor.

Further, in the stretched film of Comparative Example 8, the stretch ratio is less than 5 times (i.e., unstretched). Thus, the haze is considerably higher than 20%. It is thus found that the transparency is poor.

### INDUSTRIAL APPLICABILITY

As can be seen from above, the present invention is suitable for a stretched film used in a packing film and the like.

### DESCRIPTION OF REFERENCE CHARACTERS

- 1: Stack
- 2: Sealant Film
- 3: Polyethylene Film (Stretched Film)

## Claims

1. A stretched film containing, as a main component, polyethylene having a density of 0.950 g/cm³ or more,
the stretched film having
a water vapor transmission rate of 1.0 g/m²·day or less per 100 µm of the stretched film,
a haze of 20% or less, and
a thermal shrinkage of 10% or less in a film stretching direction when heated for 10 minutes at 100°C.

2. The stretched film of claim 1, wherein the water vapor transmission rate is 0.8 g/m²·day or less.

3. The stretched film of claim 1 or 2, wherein the haze is 10% or less.

4. The stretched film of claim 1 or 2, wherein the thermal shrinkage is 6% or less.

5. The stretched film of claim 3, wherein the thermal shrinkage is 6% or less.
